# EUROPÄISCHE PATENTANMELDUNG

(11) **EP 1 108 752 A1**
(43) Veröffentlichungstag der Anmeldung: **20.06.2001**
(21) Anmeldenummer: 00122276.9
(22) Anmeldetag: 19.10.2000
(51) Int. Cl.: C08L 83/04, C08K 5/57, C08K 5/58

(54) **Vernetzbare Organopolysiloxanmassen**

(30) Priorität: 07.12.1999 DE 19958919
(71) Anmelder: Wacker-Chemie GmbH, 81737 München (DE)
(72) Erfinder: Ziche, Wolfgang, Dr., 01619 Röderau-Bobersen (DE); Straussberger, Susanne, 84561 Mehring/Öd (DE); Obermeier, Klaus, 84489 Burghausen (DE)
(74) Vertreter: Budczinski, Angelika

(57) **Zusammenfassung**

Vernetzbare Organopolysiloxanmassen auf der Basis von Organosiliciumverbindungen mit mindestens zwei hydrolysierbaren Gruppen oder mindestens einer kondensationsfähigen Gruppe, dadurch gekennzeichnet, daß sie als Katalysator mindestens eine Zinnverbindung ausgewählt aus solchen der Formel

R_{4-d}Sn(XR¹)_{d} (I)

und der Formel

R₃₋ₑ(XR¹)ₑSn(XSnR₂)ₙ(XSnR(XR¹))ₘXSn(XR¹)ₑR₃₋ₑ (II),

enthalten, wobei
R¹, gleich oder verschieden sein kann und einen Rest der Formel

-R²-(Y-R²)_{f}Z (III)

bedeutet und
R, X, R², Y, Z, R⁷, d, e, n, m und f die in Anspruch 1 angegebenen Bedeutungen haben.

## Beschreibung

Die Erfindung betrifft insbesondere bei Raumtemperatur vernetzbare Organopolysiloxanmassen unter Verwendung von Zinnkatalysatoren sowie ein Verfahren zur Herstellung derartiger Massen.

Die Verwendung von Dialkylzinn(IV)verbindungen als Kondensationskatalysatoren in RTV-1- und RTV-2-Siliconkautschuken und anderen kondensationsvernetzenden Kautschuken, wie z.B. silanmodifizierten Polymeren ist allgemein bekannt. Hierzu sei beispielsweise auf US-A 5,597,882 und US-A 4,797,790 verwiesen. In RTV-1-Massen haben diese Zinnverbindungen allerdings den Nachteil, daß sie im allgemeinen zusätzlich einen Cokatalysator benötigen, um ausreichende Aktivität zu zeigen. Bei RTV-2-Massen wird die Vulkanisationsgeschwindigkeit durch die Menge des Zinnkatalysators gesteuert. Nachteilig ist allerdings, daß eine zu große Menge Zinnhärter im Vulkanisat eine Nachhärtung des Vulkanisates durch Einwirkung von Luftfeuchtigkeit bewirkt, die zum weitgehenden Verlust der mechanischen Festigkeit führen kann. Die Trennfähigkeit des Kautschuks nimmt meist ebenfalls ab. So ist es wünschenswert, einen Katalysatortyp mit ausreichend schneller Härtung bei gleichzeitig geringen Einsatzmengen zu haben.

Gegenstand der Erfindung sind vernetzbare Organopolysiloxanmassen auf der Basis von Organosiliciumverbindungen mit mindestens zwei hydrolysierbaren Gruppen oder mindestens einer kondensationsfähigen Gruppe, dadurch gekennzeichnet, daß sie als Katalysator mindestens eine Zinnverbindudg ausgewählt aus solchen der Formel

R_{4-d}Sn (XR¹) d (I)

und der Formel

R₃₋ₑ(XR¹)ₑSn(XSnR₂)ₙ(XSnR(XR¹))ₘXSn(XR¹)ₑR₃₋ₑ (II),

enthalten, wobei
R gleich oder verschieden sein kann und einwertige, gegebenenfalls substituierte Kohlenwasserstoffreste bedeutet,
X -O- oder -S- bedeutet,
R¹ gleich oder verschieden sein kann und einen Rest der Formel

   -R²-(Y-R²)_{f}Z (III)
bedeutet,
R² gleich oder verschieden sein kann und zweiwertige, gegebenenfalls substituierte Kohlenwasserstoffreste bedeutet,
Y gleich oder verschieden sein kann und -O-, -S-, -NR⁷- oder -PR⁷- bedeutet,
Z gleich oder verschieden sein kann und -OR⁷, -SR⁷, -NR⁷₂ oder -PR⁷₂ bedeutet,
R⁷ gleich oder verschieden sein kann und Wasserstoffatom oder einwertige, gegebenenfalls substituierte Kohlenwasserstoffreste bedeutet,
d 1, 2, oder 3 ist,
e 1, oder 2 ist,
n 0 oder eine ganze Zahl ist,
m 0 oder eine ganze Zahl ist und
f 0 oder eine ganze Zahl ist.

Bei den erfindungsgemäßen Massen handelt es sich bevorzugt um ein- oder zweikomponentige, bei Raumtempetatur vulkanisierende Massen (RTV-1- oder RTV-2-Massen). Diese können je nach Anwendung standfest oder fließfähig sein.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest, Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind Halogenalkylreste, wie der 3,3,3-Trifluor-n-propylrest, der 2,2,2,2,2,2-Hexafluorisopropylrest und der Heptafluorisopropylrest, Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 18 Kohlenstoffatomen, besonders bevorzugt um Alkylreste, insbesondere um Butylreste und Octylreste.

Beispiele für Rest R² sind Alkylenreste, wie der Methylen-, Ethylen-, Propylen-, Methylethylen- und Butylenrest.

Bevorzugt handelt es sich bei Rest R² um gegebenenfalls mit Halogenatomen substituierte, zweiwertige Kohlenwasserstoffreste mit 1 bis 4 Kohlenstoffatomen, besonders bevorzugt um den Ethylenrest.

Bevorzugt handelt es sich bei X um -O-.

Bevorzugt handelt es sich bei Y um -O-.

Bevorzugt handelt es sich bei Z um -OR⁷ und -NR⁷₂ mit R⁷ gleich der genannten Bedeutung.

Beispiele für Rest R⁷ sind Wasserstoffatom und die für R angegebenen Beispiele, wobei Wasserstoffatom und Alkylreste bevorzugt sowie Methyl-, Ethyl- und im Falle von Z gleich -NR⁷₂ Wasserstoffreste besonders bevorzugt sind.

Vorzugsweise handelt es sich bei d um 2.

Vorzugsweise handelt es sich bei e um 1.

Bevorzugt ist n 0 oder eine ganze Zahl von 1 bis 3, besonders bevorzugt 0, insbesondere falls e gleich 1 und m gleich 0 ist.

Bevorzugt ist m 0 oder eine ganze Zahl von 1 bis 3, besonders bevorzugt 0, insbesondere falls e gleich 2 und n gleich 0 ist.

Bevorzugt ist die Summe n+m gleich 0.

Bevorzugt ist f 1, 2 oder 3, besonders bevorzugt 1.

Bevorzugt handelt es sich bei Rest R¹ um

-CH₂CH₂-O-CH₂CH₂-NH₂,

-CH₂CH₂-O-CH₂CH₂-O-CH₃,

-CH₂CH₂-N(CH₂CH₃)₂

-CH₂CH₂- (O-CH₂CH₂)₆-O-CH₃,

-CH₂CH₂- (O-CH₂CH₂)₁₁-O-CH₃.

Beispiele für die erfindungsgemäß eingesetzten Zinnverbindungen der Formel (I) sind

Bu₂Sn(O-CH₂CH₂-O-CH₂CH₂-O-CH₃)₂,

Bu₂Sn (O-CH₂CH₂-N (CH₂CH₃)₂)₂,

Oct₂Sn (O-CH₂CH₂-O-CH₂CH₂-O-CH₃)₂,

Oct₂Sn (O-CH₂CH₂-N (CH₂CH₃)₂)₂,

wobei Bu gleich n-Butyl- und Oct gleich n-Octylrest ist.

Beispiele für die erfindungsgemäß eingesetzten Zinnverbindungen der Formel (II) sind

[Bu₂Sn (O-CH₂CH₂-O-CH₂CH₂-NH₂) ]₂O,

[Bu₂Sn (O-CH₂CH₂-O-CH₂CH₂-OCH₃) ]₂O,

[Oct₂Sn (O-CH₂CH₂-O-CH₂CH₂-NH₂) ]₂O,

[Oct₂Sn (O-CH₂CH₂-O-CH₂CH₂-OCH₃) ]₂O,

[Bu₂Sn (O-CH₂CH₂- (OCH₂CH₂) ₆-O-CH₃) ]₂O,

[Bu₂Sn (O-CH₂CH₂- (OCH₂CH₂) ₁₁-O-CH₃) ]₂O,

[BuSn (O-CH₂CH₂-O-CH₂CH₂-NH₂) ₂] ₂O

und

[BuSn (O-CH₂CH₂-O-CH₂CH₂-NH₂) ₂] ₂BuSn (O-CH₂CH₂-O-CH₂CH₂-NH₂),

wobei Bu gleich n-Butyl- und Oct gleich n-Octylrest ist.

Bevorzugt handelt es sich bei den in den erfindungsgemäßen Massen eingesetzten Zinnkatalysatoren um

[Bu₂Sn (O-CH₂CH₂-O-CH₂CH₂-NH₂) ]₂O,

[BU₂Sn (O-CH₂CH₂-O-CH₂CH₂-OCH₃) ]₂O,

[Oct₂Sn (O-CH₂CH₂-O-CH₂CH₂-NH₂) ]₂O,

[Oct₂Sn (O-CH₂CH₂-O-CH₂CH₂-OCH₃) ]₂O,

[Bu₂Sn (O-CH₂CH₂- (OCH₂CH₂) ₆-O-CH₃) ] ₂O

und

[Bu₂Sn (O-CH₂CH₂- (OCH₂CH₂) ₁₁-O-CH₃) ] ₂O ,

wobei

[Bu₂Sn (O-CH₂CH₂-O-CH₂CH₂-NH₂) ] ₂O

und

[Bu₂Sn (O-CH₂CH₂-O-CH₂CH₂-OCH₃) ] ₂O

besonders bevorzugt sind.

Die erfindungsgemäß eingesetzten Zinnverbindungen der Formeln (I) und (II) sind handelsübliche Produkte bzw. können nach an sich bekannten chemischen Verfahren hergestellt werden, wie etwa durch Umsetzung von Zinnoxiden R₂SnO mit 2 HOR¹ bzw. HSR¹ unter Abdestillieren des entstandenen H₂O bzw. H₂S, wobei R und R¹ die oben jeweils dafür angegebene Bedeutung haben.

Sowohl R₂SnO als auch HOR¹ bzw. HSR¹ sind handelsübliche Produkte bzw. nach in der Chemie bekannten Verfahren herstellbar.

Die Darstellung der erfindungsgemäßen Katalysatoren ist auch in situ durch direkte Zugabe der Edukte, wie R₂SnO und HOR¹ bzw. HSR^{l} zu den übrigen Komponenten der vernetzbaren Organopolysiloxanmassen möglich.

Des weiteren können die erfindungsgemäß eingesetzten Zinnverbindungen nach anderen bekannten Syntheseverfahren aus der zinnorganischen Chemie (siehe z.B. A.G. Davies Organotin Chemistry, VCH, Weinheim, 1997), wie etwa durch Umesterungen dargestellt werden.

Die erfindungsgemäßen Massen können neben den erfindungsgemäß als Kondensationskatalysatoren eingesetzten Zinnverbindungen alle Komponenten enthalten, die auch bisher zur Herstellung von bei Raumtemperatur vernetzbaren Organopolysiloxanmassen eingesetzt wurden. Bei den hydrolysierbaren Gruppen, welche die eingesetzten, an der Vernetzungsreaktion beteiligten Organosiliciumverbindungen aufweisen können, kann es sich um beliebige Gruppen handeln, wie Acetoxy-, Amino-, Oximato- und Organyloxygruppen, insbesondere Alkoxyreste, wie Ethoxyreste, Alkoxyethoxyreste und Methoxyreste. Bei den kondensationsfähigen Gruppen, welche die eingesetzten, an der Vernetzungsreaktion beteiligten Organosiliciumverbindungen aufweisen können, handelt es sich um Hydroxyreste. Ferner kann es sich bei den Organosiliciumverbindungen sowohl um Siloxane (≡Si-O-Si≡ -Strukturen) als auch um Silcarbane (≡Si-R⁵-Si≡ -Strukturen mit R⁵ gleich einem zweiwertigen, gegebenenfalls substituierten Kohlenwasserstoffrest) oder deren Copolymere handeln, wie etwa Organosiliciumverbindungen der Formel

(R³O)₃₋ₐR⁴ ₐSi-R⁵-[R⁴ ₂SiO]_{b}-R⁴ ₂Si-R⁵-SiR⁴ ₐ(OR³)₃₋ₐ,

wobei R³, R⁴, a und b die in Formel (IV) angegebene Bedeutung haben und R⁵ gleich zweiwertigem, gegebenenfalls substituierten Kohlenwasserstoffrest ist, wie z.B. ein Polyalkylenoxid-, Polyurethan- oder Polyolefinrest. Hierzu sei beispielsweise auch auf EP 747 443 A2, Seite 2, Zeilen 42 bis 53 verwiesen.

Bevorzugt handelt es sich bei den erfindungsgemäßen vernetzbaren Organopolysiloxanmassen um solche, die
(A) im wesentlichen lineare Diorganopolysiloxane mit mindestens zwei hydrolysierbaren Resten, ausgewählt aus Acetoxy-, Amino-, Oximato- und Organyloxygruppen, an einer jeden Endgruppe oder mindestens einer Hydroxygruppe an einer jeden Endgruppe,
(B) Vernetzer mit mindestens drei hydrolysierbaren Resten, ausgewählt aus Acetoxy-, Amino-, Oximato- und Organyloxygruppen, und/oder deren Teilhydrolysate und
(C) Zinnverbindung der Formel (I) und/oder (II)
enthalten.

Bei den erfindungsgemäß eingesetzten Diorganopolysiloxanen mit mindestens zwei hydrolysierbaren Gruppen oder mindestens einem kondensationsfähigen Rest an einer jeden Endgruppe handelt es sich vorzugsweise um solche der allgemeinen Formeln

(R³O)₃₋ₐR⁴ ₐSiO- [R⁴ ₂SiO]_{b}-SiR⁴ ₄(OR³)₃₋ₐ , (IV)

wobei
a 0, 1 oder 2 ist,
R⁴ gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylenund/oder Oxypropyleneinheiten aufgebaut sind, bedeutet und
R³ gleich oder verschieden sein kann Wasserstoffatom oder eine für R angegebene Bedeutung hat,
b eine ganze Zahl von 10 bis 10 000, bevorzugt 100 bis 3 000, besonders bevorzugt 400 bis 2 000, ist, mit der Maßgabe, daß a nur bei R³ gleich Wasserstoffatom den Wert 2 haben kann.

Beispiele für Reste R³ und R⁴ sind die für Rest R oben angegebenen Beispiele.

Bevorzugt handelt es sich bei Rest R⁴ um Alkylreste, besonders bevorzugt um Alkylreste mit 1 bis 4 Kohlenstoffatomen, insbesondere um den Methylrest.

Bevorzugt handelt es sich bei Rest R³ um Wasserstoffatom und Alkylreste, besonders bevorzugt um Wasserstoffatom und Alkylreste mit 1 bis 4 Kohlenstoffatomen, insbesondere um Wasserstoffatom und den Methylrest.

Der durchschnittliche Wert für die Zahl b in Formel (IV) ist vorzugsweise so gewählt, daß das Organopolysiloxan der Formel (IV) eine Viskosität von 1000 bis 2 500 000 mPa·s, besonders bevorzugt von 4000 bis 800 000 mPa·s, jeweils gemessen bei einer Temperatur von 25°C, besitzt.

Obwohl in Formel (IV) nicht angegeben bzw. aus der Bezeichnung Diorganopolysiloxan nicht entnehmbar, können bis zu 10 Molprozent der Diorganosiloxaneinheiten durch andere Siloxaneinheiten, wie R⁴₃SiO_{1/2}-, R⁴SiO_{3/2}- und SiO_{4/2}-Einheiten, ersetzt sein, wobei R⁴ die vorstehend dafür angegebene Bedeutung hat.

Beispiele für die in den erfindungsgemäßen Massen eingesetzten Diorganopolysiloxane mit mindestens zwei Organyloxyresten an einer jeden Endgruppe (A) sind

(MeO)₂MeSiO[SiMe₂O]₂₀₀₋₂₀₀₀SiMe(OMe)₂,

(EtO)₂MeSiO[SiMe₂O]₂₀₀₋₂₀₀₀SiMe (OEt)₂,

(MeO)₂ViSiO[SiMe₂O]₂₀₀₋₂₀₀₀SiVi(OMe)₂,

(EtO)₂ViSiO [SiMe₂O]₂₀₀₋₂₀₀₀SiVi(OEt)₂,

(MeO)₂CapSiO[SiMe₂O]₂₀₀₋₂₀₀₀SiCap(OMe)₂,

(MeO)₂BapSiO[SiMe₂O]₂₀₀₋₂₀₀₀SiBap(OMe)₂

und

(EtO)₂BapSiO[SiMe₂O]₂₀₀₋₂₀₀₀SiBap(OEt)₂

Beispiele für die in den erfindungsgemäßen Massen eingesetzten Diorganopolysiloxane mit mindestens einer Hydroxylgruppe an einer jeden Endgruppe (A) sind α,ω-Dihydroxypolyorganosiloxane HO-Me₂SiO[SiMe₂O]₂₀₀₋₂₀₀₀SiMe₂OH mit Me gleich Methylrest.

Weitere Beispiele für Organosiliciumverbindungen, die zur Herstellung der erfindungsgemäßen Massen eingesetzt werden können, sind (MeO)₂MeSi-CH₂CH₂-[SiMe₂O]₂₀₀₋₂₀₀₀SiMe₂-CH₂CH₂-SiMe (OMe) ₂und (EtO)₂MeSi-CH₂CH₂-[SiMe₂O]₂₀₀₋₂₀₀₀SiMe₂-CH₂CH₂-SiMe(OEt)₂, wobei Me Methylrest, Et Ethylrest, Vi Vinylrest, Cap 3-(Cyclohexylamino)propylrest und Bap 3- (n-Butylamino) propylrest bedeutet.

Die in den erfindungsgemäßen Massen eingesetzten Organosiliciumverbindungen mit mindestens zwei Organyloxyresten an einer jeden Endgruppe sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den in den erfindungsgemäßen Massen eingesetzten organyloxyfunktionellen Vernetzern (B) kann es sich um beliebige, bisher bekannte Organyloxyvernetzer handeln, wie beispielsweise Silane oder Siloxane mit mindestens drei Organyloxygruppen.

Bei den in den erfindungsgemäßen Massen eingesetzten Vernetzern (B) handelt es sich vorzugsweise um Organosiliciumverbindungen der Formel

(R³O)_{4-c}SiR⁶ _{c} (V)

wobei
- R³: gleich oder verschieden sein kann und eine der oben angegebenen Bedeutungen hat,
- R⁶: eine oben für R⁴ genannte Bedeutung besitzt und
- c: 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (V), wie auch um Teilcohydrolysate, d.h. Teilhydrolysate von mindestens zwei verschiedenen Arten von Organosiliciumverbindungen der Formel (V).

Handelt es sich bei den in den erfindungsgemäßen Massen eingesetzten Vernetzern (B) um Teilhydrolysate von Organosiliciumverbindungen der Formel (V), so sind solche mit bis zu 6 Siliciumatomen bevorzugt.

Beispiele für Rest R⁶ sind die oben für Rest R genannten Beispiele, wobei Kohlenwasserstoffreste mit 1 bis 12 Kohlenstoffatomen bevorzugte und der Methyl- und der Vinylrest besonders bevorzugt sind.

Besonders bevorzugt handelt es sich bei den in den erfindungsgemäßen Massen eingesetzten Vernetzern (B) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Aminopropyltrimethoxysilan, 3-Aminopropyltriethoxysilan, 3-Cyanopropyltrimethoxysilan, 3-Cyanopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, 3-(Glycidoxy)propyltriethoxysilan, 1,2-Bis (trimethoxysilyl) ethan, 1,2-Bis (triethoxysilyl)ethan sowie Teilhydrolysate der genannten alkoxyfunktionellen Organosiliciumverbindungen, wie z.B. Hexaethoxydisiloxan.

Die in den erfindungsgemäßen Massen eingesetzten Vernetzer (B) sind handelsübliche Produkte bzw. können nach in der Siliciumchemie bekannten Verfahren hergestellt werden.

Die erfindungsgemäßen Massen enthalten Vernetzer (B) in Mengen von vorzugsweise 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Organopolysiloxan (A).

Die erfindungsgemäßen Massen enthalten Kondensationskatalysator (C) in Mengen von vorzugsweise 0,01 bis 10,0 Gewichtsteilen, besonders bevorzugt 0,1 bis 10,0 Gewichtsteilen, insbesondere 0,5 bis 5,0 Gewichtsteilen, jeweils bezogen auf 100 Gewichtsteile Organopolysiloxan (A) .

Zusätzlich zu den oben beschriebenen Komponenten (A), (B) und (C) können die erfindungsgemäßen Massen nun weitere Stoffe, wie Weichmacher (D), Füllstoffe (E), Haftvermittler (F) und Additive (G) enthalten, wobei die zusätzlichen Stoffe (D) bis (G) die gleichen sein können, die auch bisher in unter Ausschluß von Feuchtigkeit lagerfähige und bei Zutritt von Feuchtigkeit vernetzbaren Massen eingesetzt worden sind.

Beispiele für Weichmacher (D) sind bei Raumtemperatur flüssige, durch Trimethylsiloxygruppen endblockierte Dimethylpolysiloxane, insbesondere mit Viskositäten im Bereich zwischen 50 und 1000 mPa·s, sowie hochsiedende Kohlenwasserstoffe, wie zum Beispiel Paraffinöle.

Die erfindungsgemäßen Massen enthalten Weichmacher (D) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A) .

Beispiele für Füllstoffe (E) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (E) eingesetzt werden, handelt es sich bevorzugt um hydrophile pyrogene Kieselsäure und stearinsäurebelegte Kreide.

Die erfindungsgemäßen Massen enthalten Füllstoffe (E) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Organopolysiloxanmassen eingesetzten Haftvermittler (F) sind Silane und Organopolysiloxane mit funktionellen Gruppen, wie beispielsweise solche mit Aminoalkyl-, Glycidoxypropyl- oder Methacryloxypropylresten sowie Tetraalkoxysilane. Falls jedoch bereits eine andere Komponente, wie etwa Siloxan (A) oder Vernetzer (B), die genannten funktionellen Gruppen aufweist, kann auf einen Zusatz von Haftvermittler verzichtet werden.

Die erfindungsgemäßen Massen enthalten Haftvermittler (F) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A) .

Beispiele für Additive (G) sind Pigmente, Farbstoffe, Riechstoffe, Fungicide, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organischen Lösungsmittel, wie Alkylaromaten.

Die erfindungsgemäßen Massen enthalten Additive (G) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Besonders bevorzugt handelt es sich bei den erfindungsgemäßen Massen um solche, die
(A) Diorganopolysiloxan der Formel (IV),
(B) Vernetzer der Formel (V) und/oder deren Teilhydrolysate,
(C) Zinnverbindung der Formel (I) und/oder (II) und
(E) Füllstoffe
enthalten.

Insbesondere handelt es sich bei den erfindungsgemäßen Massen um solche, die aus
(A) 100 Gewichtsteilen Polydiorganosiloxan der Formel (IV),
(B) 1,0 bis 5,0 Gewichtsteilen Vernetzer der Formel (V) und/oder deren Teilhydrolysate,
(C) 0,5 bis 5,0 Gewichtsteilen Zinnverbindung der Formel (I) und/oder (II),
(D) 0 bis 300 Gewichtsteilen Weichmacher,
(E) 0 bis 300 Gewichtsteilen Füllstoffe,
(F) 0 bis 50 Gewichtsteilen Haftvermittler,
(G) 0 bis 100 Gewichtsteilen Additive und
(H) gegebenenfalls Wasser
bestehen.

Falls es sich bei den erfindungsgemäßen Massen um vernetzbare zweikomponentige Massen handelt, sind solche bevorzugt, die
(A) im wesentlichen lineare Diorganopolysiloxane mit mindestens einer Hydroxygruppe an einer jeden Endgruppe,
(B) Vernetzer mit mindestens drei hydrolysierbaren Resten, ausgewählt aus Acetoxy-, Amino-, Oximato- und Organyloxygruppen, und/oder deren Teilhydrolysate,
(C) Zinnverbindung der Formel (I) und/oder (II) und
(H) Wasser
enthalten, wobei (A) und (H) sich vorzugsweise in der ersten und (C) sich bevorzugt in der zweiten Komponente befindet.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen αber auch bei höheren Temperaturen erfolgen, z.B. bei Temperaturen im Bereich von 35°C bis 135°C.

Falls es sich bei den erfindungsgemäßen Massen um mehrkomponentige Massen, wie RTV-2-Massen, handelt, bildet vorzugsweise ein Gemisch aus OH-terminiertem Siloxan gemäß Formel (IV) mit R³ gleich Wasserstoffatom, Füllstoffen, geringen Mengen Wasser und weiteren Zusätzen, wie Weichmacher, die pastöse oder fließfähige Basiskomponente des Zweikomponentenkautschuks. Die zweite Komponente ("Härter") enthält im Wesentlichen den Zinnkatalysator der Formel (I) und/oder (II) zur Kondensationsvenetzung und Vernetzer. Zur Initiierung der Vulkanisation werden die beiden Komponenten gemischt, bei fließfähigen Produkten im Vakuum entgast und die Masse wie üblich verarbeitet.

Die Herstellung der erfindungsgemäßen Organopolysiloxanmassen und deren Lagerung muß im Falle der einkomponentigen Massen unter im wesentlichen wasserfreien Bedingungen erfolgen, da ansonsten die Massen vorzeitig aushärten können.

Für die Vernetzung der erfindungsgemäßen einkomponentigen Massen zu Elastomeren reicht der übliche Wassergehalt der Luft aus. Für die Vernetzung der erfindungsgemäßen zweikomponentigen Massen zu Elastomeren wurde einer der Komponenten Wasser zugesetzt. Die Vernetzung kann, falls erwünscht, auch bei höheren oder niedrigeren Temperaturen als Raumtemperatur, z.B. bei -5° bis 15°C oder bei 30° bis 50°C durchgeführt werden. Vorzugsweise wird die Vernetzung bei einem Druck von 100 bis 1100 hPa, insbesondere beim Druck der umgebenden Atmosphäre, durchgeführt. Die Geschwindigkeit der Vulkanisation wird dabei im allgemeinen durch die Hautbildungszeit oder die Topfzeit angegeben.

Ein weiterer Gegenstand der vorliegenden Erfindung sind Formkörper, hergestellt durch Vernetzung der erfindungsgemäßen Massen.

Die erfindungsgemäßen vernetzbaren Organopolysiloxanmassen haben den Vorteil, daß sie sich durch eine sehr hohe Lagerstabilität und eine hohe Vernetzungsgeschwindigkeit auszeichnen.

Die erfindungsgemäßen vernetzbaren Organopolysiloxanmassen haben ferner den Vorteil, daß auf den Einsatz der sonst üblichen basischen Cokatalysatoren verzichtet werden kann.

Des weiteren haben die erfindungsgemäßen vernetzbaren Organopolysiloxanmassen den Vorteil, daß bereits geringe Mengen an Zinnkatalysatoren der Formel (I) und/oder (II) ausreichen, um eine sehr hohe Vernetzungsgeschwindigkeit zu erzielen.

Ferner liegt der Vorteil der erfindungsgemäßen Massen in der breiten Variation und Verfügbarkeit der in den Zinnverbindungen der Formel (I) und (II) verwendeten Liganden, die eine Steuerung der Vulkanisationsgeschwindigkeit über die Kettenlänge der Liganden zulassen. Je größer in Formel (I) und (II) der Wert für f ist, desto längere Vulkanisationszeiten werden erhalten.

Die erfindungsgemäßen Massen können für alle Verwendungszwecke eingesetzt werden, für die bei Raumtemperatur zu Elastomeren vernetzende Organopolysiloxanmassen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasserund Luftfahrzeugen, oder als Klebstoffe oder Verkittungsmassen, z.B. im Fensterbau oder bei der Herstellung von Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

### Synthese der Katalysatoren (Kl) bis (K7)

(K1): Dibutylzinnoxid wird in Toluol mit einem Mol-Äquivalent 2-Aminoethoxyethanol zum Rückfluß erhitzt und das entstehende Wasser azeotrop entfernt. Das Produkt wird quantitativ in guter Reinheit erhalten (¹H-NMR). Die Synthese der Katalysatoren
(K2)-(K7) erfolgt in analoger Weise, evtl. in einem anderen stöchiometrischen Verhältnis.

[Bu₂Sn (O-CH₂CH₂-O-CH₂CH₂-NH₂)]₂O (K1): farbloser Feststoff.
[Oct₂Sn(O-CH₂CH₂-O-CH₂CH₂-NH₂)]₂O (K2) : farbloser Feststoff.
Bu₂Sn(O-CH₂CH₂-O-CH₂CH₂-O-CH₃)₂ (K3) : farblose Flüssigkeit.
[Oct₂Sn(O-CH₂CH₂-O-CH₂CH₂-OCH₃)]₂O (K4): farblose Flüssigkeit.
Bu₂Sn(O-CH₂CH₂-NEt₂)₂ (K5) : leicht gelbe, viskose Flüssigkeit.
[Bu₂SnR]₂O mit R = O-(CH₂CH₂-O)ₚ-O-CH₃) P ≈ 7 (K6) : leicht gelbe, viskose Flüssigkeit.
[Bu₂SnR]₂O mit R = O-(CH₂CH₂-O)ₚ-O-CH₃)₄ P ≈ 12 (K7) : leicht gelbe viskose Flüssigkeit.

Bu: n-Butylrest
Oct: n-Octylrest
Et: Ethylrest

### Beispiel 1

In einem Planetenmischer mit Vakuumausrüstung werden unter Wasserausschluß 55,0 Gew.-Teile eines Polydimethylsiloxans mit -OSi(OCH₃)₂(CH₃)-Endgruppen, das eine Viskosität von 80000 mPas besitzt, mit 31,0 Gew.-Teilen eines Polydimethylsiloxans mit -OSi (CH₃)₃-Endgruppen (Viskosität 100 mPas) und 4,0 Gew.-Teilen Methyltrimethoxysilan vermischt. Dann werden 8,0 Gew.-Teile pyrogene Kieselsäure mit einer spezifischen Oberfläche nach BET von 150 m²/g eingemischt, zum Schluß 0,3 Gew.-Teile des Zinnkatalysators (K1), dessen Herstellung oben beschrieben ist. Nach Homogenisieren im Vakuum wird der Compound in feuchtigkeitsdichte Gebinde abgefüllt. Die Hautbildungszeit beträgt 10 Minuten, die Masse schwitzt nicht aus und das Vulkanisat klebt nicht.

### Vergleichsbeispiel 1

Die in Beispiel 1 beschriebene Verfahrensweise wird wiederholt mit der Abänderung, daß anstelle von Katalysator (K1) ein Katalysator (VK8) eingesetzt wird, der aus Dibutylzinndiacetat und Tetraethoxysilan hergestellt wurde. Die Vulkanisation der RTV-Masse erfolgt nicht, sie bleibt klebrig und schwitzt aus. Werden zusätzlich 1,8 Gew.-Teile eines Aminopropylsilans zugegeben erfolgt die Vulkanisation ebenfalls.

### Beispiel 2

In einem Planetenmischer mit Vakuumausrüstung werden unter Wasserausschluß 60,9 Gew.-Teile eines Polydimethylsiloxans mit -OSi(OCH₃)₂(CH₃)-Endgruppen, das eine Viskosität von 80000 mPas besitzt, mit 24,7 Gew.-Teilen eines Polydimethylsiloxans mit -OSi (CH₃)₃-Endgruppen (Viskosität 100 mPas), 2,0 Gew.-Teilen Vinyltrimethoxysilan, 1,5 Gew.-Teilen Methyltrimethoxysilan und 2,2 Gew.-Teilen Aminopropylsilan als Haftvermittler vermischt. Dann werden 8,5 Gew.-Teile pyrogene Kieselsäure mit einer spezifischen Oberfläche nach BET von 150 m²/g eingemischt, zum Schluß 0,2 Gew.-Teile der in Tabelle 1 angegebenen Zinnkatalysatoren.

Nach Homogenisieren im Vakuum wird der Compound in feuchtigkeitsdichte Gebinde abgefüllt, die ersten 672 Stunden (4 Wochen) bei Raumtemperatur (Prüfung der HBZ nach 168 h) und anschließend 1344 Stunden (8 Wochen) bei 50°C gelagert. Nach der in Tabelle 1 angegebenen Lagerzeit wird anhand von Raupen die Hautbildungszeit (HBZ; Zeit bis zur Ausbildung einer trockenen Oberfläche der Raupe) ermittelt. Die jeweils verwendeten Katalysatoren und die erzielten Ergebnisse sind in Tabelle 1 aufgeführt.

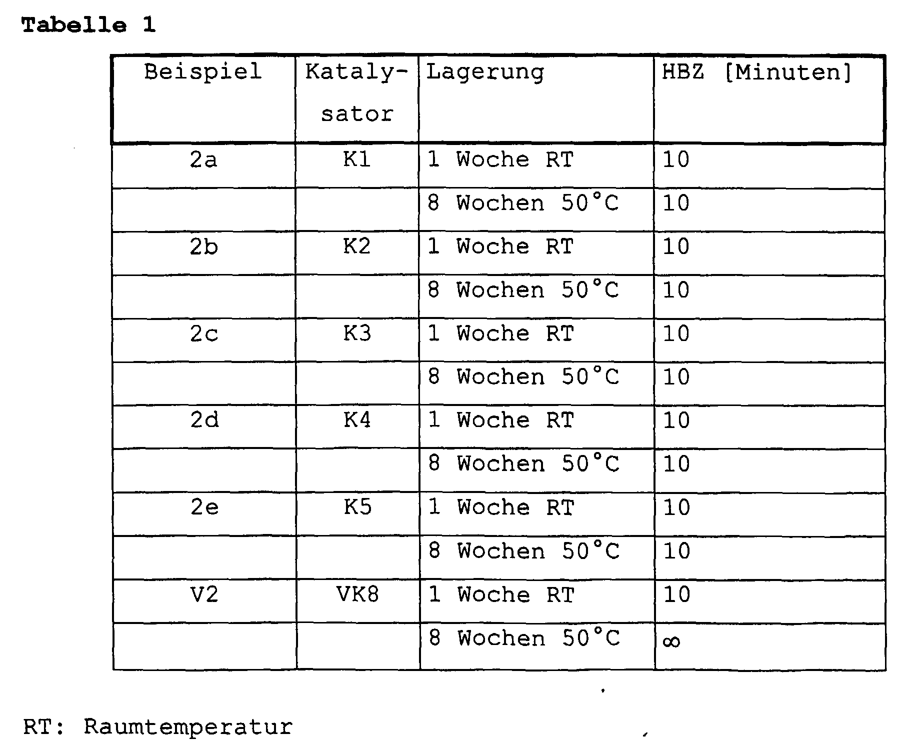

Die jeweils eingesetzte Menge an Zinnkatalysator in Gew.-Teilen Zinn ist in den Beispielen 2a-2e und Vergleichsbeispiel V2 gleich.
Die Hautbildungszeiten bleiben stabil bei 10 min, die Vulkanisation ist weiterhin gut.

### Vergleichsbeispiel 2 (V2)

In einem Planetenmischer mit Vakuumausrüstung werden unter Wasserausschluß 62,1 Gew.-Teile eines Polydimethylsiloxans mit -OSi(OCH₃)₂(CH₃)-Endgruppen, das eine Viskosität von 80000 mPas besitzt, mit 28,6 Gew.-Teilen eines Polydimethylsiloxans mit -OSi(CH₃)₃-Endgruppen (Viskosität 100 mPas), 1,75 Gew.-Teilen Vinyltrimethoxysilan und 1,75 Gew.-Teilen Methyltrimethoxysilan und 2,2 Gew.-Teilen Aminopropylsilan als Haftvermittler vermischt. Dann werden 8,5 Gew.-Teile pyrogene Kieselsäure mit einer spezifischen Oberfläche nach BET von 150 m²/g eingemischt, zum Schluß 0,3 Gew.-Teile eines aus Dibutylzinndiacetat und Tetraethoxysilan hergestellten Zinnkondensationskatalysators (VK8). Nach Homogenisieren im Vakuum wird der Compound in feuchtigkeitsdichte Gebinde abgefüllt. Die Masse und die Vulkanisate sind farblos. Nach 168 Stunden (1 Woche) Lagerung bei 50°C vulkanisiert die Masse nicht mehr. Die Ergebnisse finden sich in Tabelle 1.

### Beispiel 3

Als Komponente 1 (Grundmasse) einer RTV-2-Masse wird eine Mischung im wesentlichen bestehend aus Polydimethylsiloxan mit Silanolendgruppen, Wasser und Füllstoffen (käuflich erhältlich unter der Bezeichnung Elastosil® M 4470 bei der Wacker-Chemie GmbH, Deutschland) verwendet.

Zur Herstellung der Komponente 2 (Härterkomponente) der RTV-2-Masse werden die Katalysatoren K1 bis K5 jeweils in Tetraethylsilikat in einer Menge gelöst, daß Lösungen entstehen, die 1 bzw. 5 Gew% Zinn enthalten.

In jeweils 150 g der Grundkomponente werden 4,5 g der jeweiligen Härterkomponente 2 Minuten gut eingerührt. Die Topfzeit, d.h. die Zeit bis eine Viskosität von 100 000 mPas der erhaltenen Masse erreicht wird, wird in Minuten gemessen. Angaben über den verwendeten Katalysator, den Zinngehalt in der Härterkomponente und der Topfzeit finden sich in Tabelle 2.

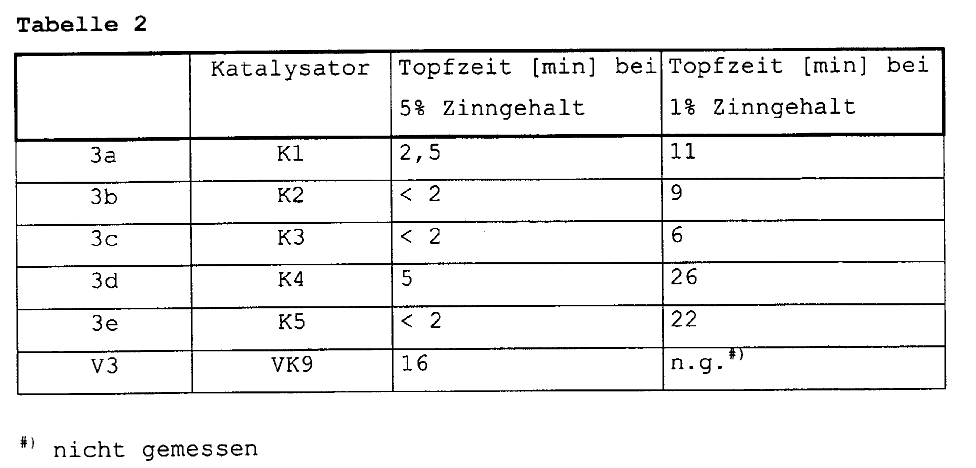

### Vergleichsbeispiel 3 (V3)

Die in Beispiel 3 beschriebene Verfahrensweise wird wiederholt mit der Abänderung, daß als Katalysator VK9 ein Härter, der im wesentlichen aus Alkoxysilanvernetzer und einer Dialkyldiacyloxyzinnverbindung besteht (käuflich erhältlich unter der Bezeichnung "Härter T40" bei der Wacker-Chemie GmbH, Deutschland), eingesetzt wird. Die Ergebnisse finden sich in Tabelle 2.

## Patentansprüche

1. Vernetzbare Organopolysiloxanmassen auf der Basis von Organosiliciumverbindungen mit mindestens zwei hydrolysierbaren Gruppen oder mindestens einer kondensationsfähigen Gruppe, dadurch gekennzeichnet, daß sie als Katalysator mindestens eine Zinnverbindung ausgewählt aus solchen der Formel
R_{4-d}Sn(XR¹) d (I)
und der Formel
R₃₋ₑ(XR¹)ₑSn (XSnR₂)ₙ(XSnR (XR¹))ₘXSn(XR¹)ₑR₃₋ₑ (II),
enthalten, wobei
R gleich oder verschieden sein kann und einwertige, gegebenenfalls substituierte Kohlenwasserstoffreste bedeutet,
X -O- oder -S- bedeutet,
R¹ gleich oder verschieden sein kann und einen Rest der Formel
-R²-(Y-R²)_{f}Z (III)
bedeutet,
R² gleich oder verschieden sein kann und zweiwertige, gegebenenfalls substituierte Kohlenwasserstoffreste bedeutet,
Y gleich oder verschieden sein kann und -O-, -S-, -NR⁷- oder -PR⁷- bedeutet,
Z gleich oder verschieden sein kann und -OR⁷, -SR⁷, -NR⁷₂ oder -PR⁷₂ bedeutet,
R⁷ gleich oder verschieden sein kann und Wasserstoffatom oder einwertige, gegebenenfalls substituierte Kohlenwasserstoffreste bedeutet,
d 1, 2, oder 3 ist,
e 1, oder 2 ist,
n 0 oder eine ganze Zahl ist,
m 0 oder eine ganze Zahl ist und
f 0 oder eine ganze Zahl ist.

2. Vernetzbare Massen gemäß Anspruch 1, dadurch gekennzeichnet, daß X gleich -O- ist.

3. Vernetzbare Massen gemäß Anspruch 1 oder 2, dadurch gekennzeichnet, daß Y gleich -O- ist.

4. Vernetzbare Massen gemäß einem oder mehreren der Ansprüche 1 bis 3, dadurch gekennzeichnet, daß es sich um solche handelt, die
(A) im wesentlichen lineare Diorganopolysiloxane mit mindestens zwei hydrolysierbaren Resten, ausgewählt aus Acetoxy-, Amino-, Oximato- und Organyloxygruppen, an einer jeden Endgruppe oder mindestens einer Hydroxygruppe an einer jeden Endgruppe,
(B) Vernetzer mit mindestens drei hydrolysierbaren Resten, ausgewählt aus Acetoxy-, Amino-, Oximato- und Organyloxygruppen, und/oder deren Teilhydrolysate und
(C) Zinnverbindung der Formel (I) und/oder (II)
enthalten.

5. Vernetzbare Massen gemäß einem oder mehreren der Ansprüche 1 bis 4, dadurch gekennzeichnet, daß es sich um solche handelt, die Kondensationskatalysator (C) in Mengen von 0,01 bis 10,0 Gewichtsteilen, bezogen auf 100 Gewichtsteile Organopolysiloxan (A), enthalten.

6. Vernetzbare Massen gemäß einem oder mehreren der Ansprüche 1 bis 5, dadurch gekennzeichnet, daß es sich um solche handelt, die
(A) Diorganopolysiloxan der Formel (IV),
(B) Vernetzer der Formel (V) und/oder deren Teilhydrolysate,
(C) Zinnverbindung der Formel (I) und/oder (II) und
(E) Füllstoffe
enthalten.

7. Vernetzbare Massen gemäß einem oder mehreren der Ansprüche 1 bis 6, dadurch gekennzeichnet, daß es sich um solche handelt, die aus
(A) 100 Gewichtsteilen Polydiorganosiloxan der Formel (IV),
(B) 1,0 bis 5,0 Gewichtsteilen Vernetzer der Formel (V) und/oder deren Teilhydrolysate,
(C) 0,5 bis 5,0 Gewichtsteilen Zinnverbindung der Formel (I) und/oder (II),
(D) 0 bis 300 Gewichtsteilen Weichmacher,
(E) 0 bis 300 Gewichtsteilen Füllstoffe,
(F) 0 bis 50 Gewichtsteilen Haftvermittler,
(G) 0 bis 100 Gewichtsteilen Additive und
(H) gegebenenfalls Wasser
bestehen.

8. Formkörper, hergestellt durch Vernetzung der Massen gemäß einem oder mehreren der Ansprüche 1 bis 7.
